# EUROPEAN PATENT APPLICATION

(11) **EP 4 793 140 A1**
(43) Date of publication of application: **19.08.2026**
(21) Application number: 26154030.6
(22) Date of filing: 26.01.2026
(51) Int. Cl.: B62D 21/15, B62D 25/02, B62D 25/20, B60K 1/04

(54) **LOWER VEHICLE-BODY STRUCTURE FOR VEHICLE**

(30) Priority: 14.02.2025 JP 2025022063
(71) Applicant: MAZDA MOTOR CORPORATION, Hiroshima 730-8670 (JP)
(72) Inventor: Eiji, Kamemoto, Aki-gun, Hiroshima, 730-8670 (JP); Takuya, Saeki, Aki-gun, Hiroshima, 730-8670 (JP); Seiji, Saito, Aki-gun, Hiroshima, 730-8670 (JP); Hiroshi, Sakai, Aki-gun, Hiroshima, 730-8670 (JP)
(74) Representative: Lorenz Seidler Gossel Part. mbB

(57) **Abstract**

[Problem] To enhance energy absorption in a side collision.

[Means for Solution] A lower vehicle-body structure for a vehicle includes: a floor panel 4; side sills 10 coupled to both end portions of the floor panel 4 in a vehicle width direction, and extending in a vehicle body front-rear direction; reinforcements 15 disposed in the side sills 10, and extending in the vehicle body front-rear direction; and cross members 30 disposed on an upper surface of the floor panel 4, and extending in a vehicle width direction. Each cross member 30 is disposed at a position that overlaps with the reinforcement 15 as viewed in a side view of the vehicle, and an upper surface of a vehicle-width-direction outer end portion of the cross member 30 is formed to be inclined upward as the upper surface of the vehicle-width-direction outer end portion of the cross member 30 extends from a vehicle-width-direction inner side toward a vehicle-width-direction outer side.

## Description

### [Technical Field]

The present disclosure relates to a lower vehicle-body structure for a vehicle.

### [Background Art]

It is generally known that, in a vehicle such as an electric automobile that includes a motor serving as a drive source for driving the vehicle and a battery that stores power to be supplied to the motor, the battery, which has a large size and a large weight, is disposed below a floor panel at a position between a pair of left and right side sills coupled to both end portions of the floor panel in the vehicle width direction, the floor panel forming the floor surface of a vehicle cabin.

Patent Literature 1, for example, discloses an electric automobile with a battery disposed below a floor panel. The electric automobile has cross members extending in the vehicle width direction are disposed on the upper surface of the floor panel, and reinforcements disposed in side sills coupled to both end portions of the floor panel in the vehicle width direction, so that side collision performance is enhanced.

### [Citation List]

### [Patent Literature]

[Patent Literature 1] U.S. Patent Application Publication No. 2024/0051612

### [Summary of Invention]

### [Problem to be Solved by the Invention]

For a vehicle in which reinforcements extending in the vehicle body front-rear direction are disposed in side sills, by disposing each reinforcement at a position that overlaps, in the up-down direction, with the cross member disposed on the upper surface of the floor panel, energy absorption can be enhanced by the reinforcement when an impact load acts on the side sill from the vehicle-width-direction outer side in a side collision. However, there is a concern that the cross member may be flexurally deformed downward by the load transmitted to the cross member from the side sill, thereby preventing sufficient energy absorption of the side sill and the reinforcement.

It is an object of the present disclosure to provide a lower vehicle-body structure for a vehicle that is capable of enhancing energy absorption in a side collision.

### [Means for Solving the Problem]

The present disclosure provides a lower vehicle-body structure for a vehicle, the lower vehicle-body structure including: a floor panel; side sills coupled to both end portions of the floor panel in a vehicle width direction, and extending in a vehicle body front-rear direction; a reinforcement disposed in each of the side sills, and extending in the vehicle body front-rear direction; and a cross member disposed on an upper surface of the floor panel, and extending in a vehicle width direction, wherein the cross member is disposed at a position that overlaps with the reinforcement as viewed in a side view of the vehicle, and at least a part of an upper surface of a vehicle-width-direction outer end portion of the cross member is formed to be inclined upward as the upper surface of the vehicle-width-direction outer end portion of the cross member extends from a vehicle-width-direction inner side toward a vehicle-width-direction outer side.

According to the present disclosure, the side sill, in which the reinforcement is disposed, is coupled to the floor panel, and the cross member is disposed on the upper surface of the floor panel. The cross member is disposed at the position that overlaps with the reinforcement as viewed in a side view of the vehicle, and at least a part of the upper surface of the vehicle-width-direction outer end portion is formed to be inclined upward as the upper surface of the vehicle-width-direction outer end portion extends from the vehicle-width-direction inner side toward the vehicle-width-direction outer side. When an impact load acts on the side sill from the vehicle-width-direction outer side in a side collision, it is possible to inhibit the vehicle-width-direction outer end portion of the cross member from being flexurally deformed downward by the impact load transmitted to the cross member from the side sill via the reinforcement, thereby causing the reinforcement to be flexurally deformed downward, compared with a case in which the upper surface of the vehicle-width-direction outer end portion of the cross member is formed completely at the same height as the upper surface of the vehicle-width-direction inner side of the cross member. Accordingly, the side sill and the reinforcement can be collapsed and deformed in a straight line in the vehicle width direction to enhance energy absorption of the side sill and the reinforcement.

An upper end portion of the cross member and an upper end portion of the reinforcement may be disposed at positions that overlap with each other as viewed in a side view of the vehicle.

With this configuration, compared with a case in which the upper end portion of the cross member and the upper end portion of the reinforcement are disposed at different positions as viewed in a side view of the vehicle, the side sill and the reinforcement can be collapsed and deformed in a straight line in the vehicle width direction.

The lower vehicle-body structure for a vehicle may include a battery housing below the floor panel, the battery housing containing a battery, the battery may include battery modules, and the cross member may be formed such that a vehicle-width-direction inner side of the vehicle-width-direction outer end portion of the cross member is located at a position that does not overlap with a vehicle-width-direction outer end portion of the battery modules in the vehicle width direction.

With this configuration, it is possible to suppress interference between the side sill and the battery modules, thereby enhancing protection performance of the battery even in a case in which, in a side collision, the vehicle-width-direction outer side of the vehicle-width-direction outer end portion of the cross member is collapsed and deformed by an impact load transmitted to the cross member from the side sill via the reinforcement, compared with a case in which the vehicle-width-direction outer side of the vehicle-width-direction outer end portion of the cross member is formed at a position that overlaps with the vehicle-width-direction outer end portion of the battery modules in the vehicle width direction.

The cross member may include an upper surface and side surfaces on both sides, the side surfaces extending downward from the upper surface, a recess that is recessed downward may be provided in the upper surface, and an upper surface of a vehicle-width-direction outer end portion of a bottom wall of the recess may be formed to be inclined upward as the upper surface of the vehicle-width-direction outer end portion of the bottom wall extends from the vehicle-width-direction inner side toward the vehicle-width-direction outer side.

With this configuration, strength and rigidity of the cross member can be enhanced by the recess that is provided in the cross member, compared with a case in which no recess is provided in the upper surface of the cross member, and the upper surface of the vehicle-width-direction outer end portion of the cross member is formed to be inclined upward as the upper surface of the vehicle-width-direction outer end portion of the cross member extends from the vehicle-width-direction inner side toward the vehicle-width-direction outer side.

The reinforcement may include a plurality of closed cross-section portions arranged in the vehicle width direction.

With this configuration, compared with a case that uses a reinforcement including one closed cross-section portion in the vehicle width direction, the plurality of closed cross-section portions can be collapsed and deformed by an impact load when an impact load acts on the side sill in a side collision, thereby enhancing energy absorption of the reinforcement.

### [Advantageous Effect of Invention]

According to the lower vehicle-body structure for a vehicle according to the present disclosure, it is possible to enhance energy absorption in a side collision.

### [Brief Description of Drawings]

FIG. 1 is a plan view of a lower portion of a vehicle body to which a lower vehicle-body structure according to an embodiment of the present disclosure is applied.
FIG. 2 is a cross-sectional view of the lower portion of the vehicle body taken along line Y2-Y2 in FIG. 1.
FIG. 3 is a cross-sectional view of a cross member and a floor panel taken along line Y3-Y3 in FIG. 2.
FIG. 4 is a diagram for illustrating vehicle-body deformation in a side collision.

### [Mode for Carrying Out the Invention]

An embodiment of the present disclosure will be described below with reference to the attached drawings.

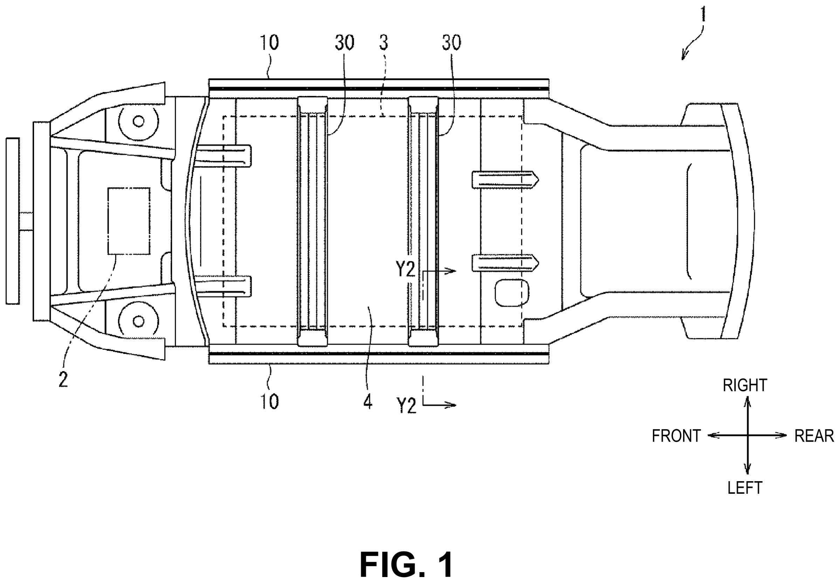

FIG. 1 is a plan view of the lower portion of a vehicle body to which a lower vehicle-body structure according to the embodiment of the present disclosure is applied. As shown in FIG. 1, a vehicle body 1 to which the lower vehicle-body structure according to the embodiment of the present disclosure is applied is a vehicle body of an electric automobile or the like that includes a motor 2 serving as a drive source that drives the vehicle and a battery 3 storing power to be supplied to the motor 2 or the like.

The vehicle body 1 includes a floor panel 4, a pair of left and right side sills 10 having a closed cross-sectional shape, and cross members 30 at the lower portion of the vehicle body, the floor panel 4 forming the floor surface of a vehicle cabin and having a flat plate shape, the pair of left and right side sills 10 being coupled to both end portions of the floor panel 4 in the vehicle width direction and extending in the vehicle body front-rear direction, the cross members 30 being disposed on the upper surface of the floor panel 4 at positions between the pair of left and right side sills 10 and extending in the vehicle width direction.

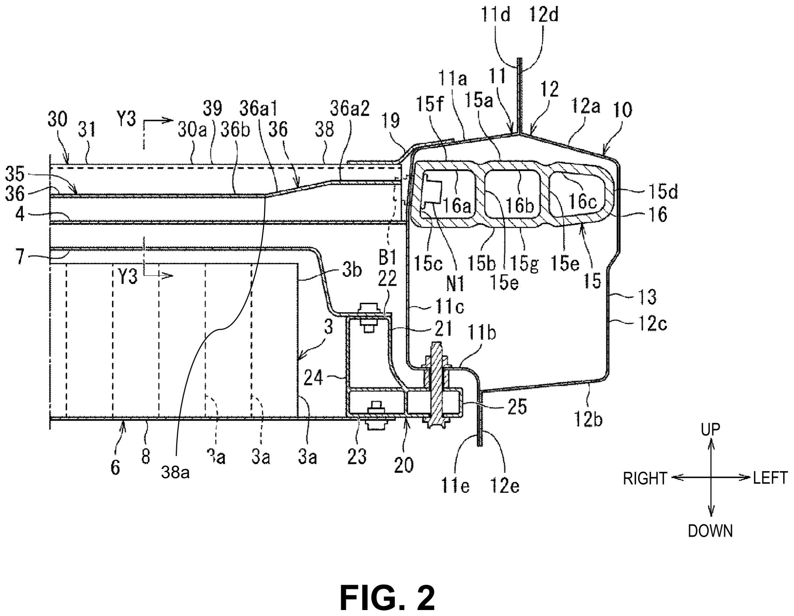

FIG. 2 is a cross-sectional view of the lower portion of the vehicle body taken along line Y2-Y2 in FIG. 1. As shown in FIG. 2, each of the left and right side sills 10 includes a side sill inner portion 11 and a side sill outer portion 12, the side sill inner portion 11 forming the vehicle-body inner side of the side sill 10, the side sill outer portion 12 forming the vehicle-body outer side of the side sill 10. Each of the side sill inner portion 11 and the side sill outer portion 12 is formed by pressing a metal plate-like member, such as a steel sheet, into a substantially hat shape in cross section.

The side sill inner portion 11 includes an upper surface 11a, a lower surface 11b, and a side surface 11c, the upper surface 11a extending in the substantially horizontal direction, the lower surface 11b being located below the upper surface 11a and extending in the substantially horizontal direction, the side surface 11c extending in the up-down direction. The side sill inner portion 11 is formed such that the side surface 11c projects toward the inner side of the vehicle body. The side sill inner portion 11 also includes an upper flange portion 11d and a lower flange portion 11e, the upper flange portion 11d extending upward from the upper surface 11a, the lower flange portion 11e extending downward from the lower surface 11b.

The side sill outer portion 12 includes an upper surface 12a, a lower surface 12b, and a side surface 12c, the upper surface 12a extending in the substantially horizontal direction, the lower surface 12b being located below the upper surface 12a and extending in the substantially horizontal direction, the side surface 12c extending in the up-down direction. The side sill outer portion 12 is formed such that the side surface 12c projects toward the outer side of the vehicle body. The side sill outer portion 12 also includes an upper flange portion 12d and a lower flange portion 12e, the upper flange portion 12d extending upward from the upper surface 12a, the lower flange portion 12e extending downward from the lower surface 12b.

The upper flange portion 11d of the side sill inner portion 11 and the upper flange portion 12d of the side sill outer portion 12 are joined together, and the lower flange portion 11e of the side sill inner portion 11 and the lower flange portion 12e of the side sill outer portion 12 are joined together. The side sill 10 is formed to have a substantially rectangular closed cross-sectional shape by the side sill inner portion 11 and the side sill outer portion 12, and a closed cross-section portion 13 extends in the vehicle body front-rear direction.

A reinforcement 15 that reinforces the side sill 10 is disposed in each side sill 10. The reinforcement 15 extends in the vehicle body front-rear direction along the side sill 10, and is formed to have a substantially rectangular closed cross-sectional shape. The reinforcement 15 is formed by extruding aluminum.

The reinforcement 15 includes a closed cross-section portion 16 that is formed to have a substantially rectangular closed cross-sectional shape. The reinforcement 15 includes an upper wall 15a, a lower wall 15b, an inner wall 15c, and an outer wall 15d, and is formed to have a closed cross-sectional shape, the upper wall 15a extending in the substantially horizontal direction, the lower wall 15b being located below the upper wall 15a and extending in the substantially horizontal direction, the inner wall 15c extending in the substantially vertical direction to connect the vehicle-width-direction inner end portions of the upper wall 15a and the lower wall 15b together, the outer wall 15d extending in the substantially vertical direction to connect the vehicle-width-direction outer end portions of the upper wall 15a and the lower wall 15b together.

The reinforcement 15 includes two partition walls 15e that extend in the substantially vertical direction to connect the centers of the upper wall 15a and the lower wall 15b in the vehicle width direction, and that divide the closed cross-section portion 16. The closed cross-section portion 16 of the reinforcement 15 is divided into three closed cross-section portions 16a, 16b, 16c arranged in the vehicle width direction by the two partition walls 15e.

Each of the three closed cross-section portions 16a, 16b, 16c of the reinforcement 15 is formed to have a substantially rectangular shape in cross section by the upper wall, the lower wall, the inner wall, and the outer wall, the upper wall and the lower wall extending in the vehicle width direction, the inner wall connecting the vehicle-width-direction inner sides of the upper wall and the lower wall, the outer wall connecting the vehicle-width-direction outer sides of the upper wall and the lower wall. The reinforcement 15 may have one or a plurality of closed cross-section portions.

The reinforcement 15 is fixed and supported on the side sill 10 such that the inner wall 15c is mounted on the side surface 11c of the side sill inner portion 11 with bolts B1 and nuts N1 serving as fastening members, the side surface 11c forming the inner side surface of the side sill 10. The reinforcement 15 is disposed such that the outer wall 15d is spaced apart from the side surface 12c of the side sill outer portion 12, the side surface 12c forming the outer side surface of the side sill 10.

As shown in FIG. 1, two cross members 30 are disposed spaced apart from each other in the vehicle body front-rear direction, and are joined to the upper surface of the floor panel 4 by welding or the like. The two cross members 30 have the same configuration. As shown in FIG. 2, each cross member 30 is disposed at a position that overlaps with the reinforcement 15 as viewed in a side view of the vehicle. An upper end portion 30a of the cross member 30, specifically, an upper surface 31 described later, and an upper end portion 15f of the reinforcement 15, specifically, the upper wall 15a, are disposed at positions that overlap with each other as viewed in a side view of the vehicle. A lower end portion 15g of the reinforcement 15, specifically, the lower wall 15b, is disposed at a position that overlaps with the floor panel 4 in the up-down direction.

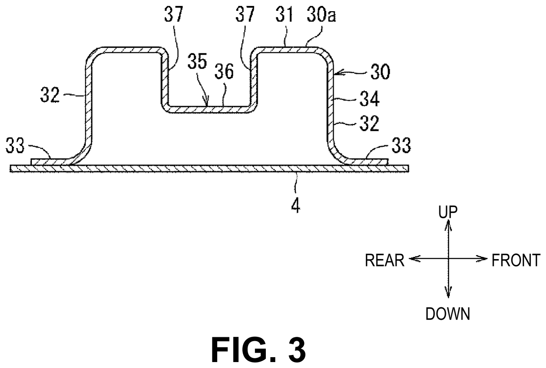

FIG. 3 is a cross-sectional view of the cross member and the floor panel taken along line Y3-Y3 in FIG. 2. As shown in FIG. 3, the cross member 30 is formed by pressing a metal plate-like member, such as a steel sheet, into a substantially hat shape in cross section. The cross member 30 includes the upper surface 31, side surfaces 32 on both sides, and flange portions 33 on both sides, the upper surface 31 extending in the substantially horizontal direction, the side surfaces 32 extending downward in the substantially vertical direction from the end portion of the upper surface 31 on the vehicle-body front side and the end portion of the upper surface 31 on the vehicle-body rear side, the flange portions 33 extending in the substantially horizontal direction from the side surfaces 32 on both sides.

The flange portions 33 on both sides are joined to the upper surface of the floor panel 4, and therefore the cross member 30 forms a closed cross-section portion 34 together with the floor panel 4, the closed cross-section portion 34 extending in the vehicle width direction. As shown in FIG. 2, the cross member 30 is also coupled to the side sill 10 such that the upper surface 31 and the side surfaces 32 on both sides are joined to the upper surface 11a and the side surface 11c of the side sill inner portion 11 via a bracket 19.

As shown in FIG. 3, a recess 35 that is recessed downward is provided in the upper surface 31 of the cross member 30 at the center in the front-rear direction. The recess 35 is provided to extend across the entire cross member 30 in the vehicle width direction. The recess 35 includes a bottom wall 36 and side walls 37 on both sides, and is formed to have a substantially rectangular cross-sectional shape, the bottom wall 36 extending in the substantially horizontal direction, the side walls 37 extending upward in the substantially vertical direction from the end portion of the bottom wall 36 on the vehicle-body front side and the end portion of the bottom wall 36 on the vehicle-body rear side. The bottom wall 36 of the recess 35 is disposed at a height substantially equal to the height of the center of the side surfaces 32 of the cross member 30 in the up-down direction. The bottom wall 36 may have a height substantially equal to that of the upper side of the side surfaces 32 of the cross member 30, or may have a height substantially equal to that of the lower side of the side surfaces 32 of the cross member 30.

As shown in FIG. 2, the cross member 30 is formed such that a vehicle-width-direction outer end portion 36a of the bottom wall 36 of the recess 35 is inclined upward as the vehicle-width-direction outer end portion 36a extends from the vehicle-width-direction inner side toward the vehicle-width-direction outer side. A vehicle-width-direction inner portion 36b of the bottom wall 36 extends in the horizontal direction, which is orthogonal to the up-down direction. The vehicle-width-direction outer end portion 36a of the bottom wall 36 includes an inclined portion 36a1 and a horizontal portion 36a2, the inclined portion 36a1 being inclined upward at a predetermined angle as the inclined portion 36a1 extends from the vehicle-width-direction inner portion 36b of the bottom wall 36 toward the vehicle-width-direction outer side, the horizontal portion 36a2 extending in the horizontal direction from the inclined portion 36a1 toward the vehicle-width-direction outer side. The cross member 30 is bent at a position between the vehicle-width-direction inner portion 36b of the bottom wall 36 and the inclined portion 36a1 of the vehicle-width-direction outer end portion 36a of the bottom wall 36, and at a position between the inclined portion 36a1 and the horizontal portion 36a2 of the vehicle-width-direction outer end portion 36a of the bottom wall 36.

In the bottom wall 36 of the recess 35 of the cross member 30, the vehicle-width-direction inner part of the vehicle-width-direction outer end portion 36a is the inclined portion 36a1, and the vehicle-width-direction outer part of the vehicle-width-direction outer end portion 36a is the horizontal portion 36a2. In the bottom wall 36 of the recess 35, the vehicle-width-direction outer end portion 36a may include only the inclined portion 36a1 without including the horizontal portion 36a2.

In this manner, the at least a part of the upper surface of a vehicle-width-direction outer end portion 38 of the cross member 30 is formed to be inclined upward relative to a vehicle-width-direction inner portion 39 of the cross member 30 as the upper surface of the vehicle-width-direction outer end portion 38 extends from the vehicle-width-direction inner side toward the vehicle-width-direction outer side. To be more specific, the recess 35 of the cross member 30 is formed such that the upper surface of the vehicle-width-direction outer end portion 36a of the bottom wall 36 is inclined upward as the upper surface of the vehicle-width-direction outer end portion 36a extends from the vehicle-width-direction inner portion 36b toward the vehicle-width-direction outer side.

In the vehicle body 1, as shown in FIG. 1, the battery 3 is disposed below the floor panel 4. As shown in FIG. 2, the vehicle body 1 includes a battery housing 6 and a battery frame 20, the battery housing 6 being disposed below the floor panel 4 and containing the battery 3, the battery frame 20 supporting the battery housing 6 and being mounted on the left and right side sills 10. The battery 3 includes a plurality of battery modules 3a that store power to be supplied to the motor 2 or the like, and the battery 3 is constituted by forming the plurality of battery modules 3a into a unit.

The battery housing 6 includes an upper cover 7 and a lower cover 8, the upper cover 7 covering the upper side of the battery 3 and extending in the substantially horizontal direction, the lower cover 8 covering the lower side of the battery 3 and extending in the substantially horizontal direction. The upper cover 7 is coupled to the lower cover 8. The battery 3 is fixed to the battery housing 6. The battery housing 6 is formed by pressing aluminum, for example.

The battery frame 20 is disposed on the vehicle-width-direction outer side of the battery housing 6 to extend in the vehicle body front-rear direction, and is formed to have a substantially L shape in cross section. The battery frame 20 is formed by extruding aluminum. The battery frame 20 includes a closed cross-section portion 21 extending in the vehicle body front-rear direction and formed to have a closed cross-sectional shape.

The battery frame 20 includes an upper surface 22, a lower surface 23, an inner surface 24, and an outer surface 25, and is formed to have a closed cross-sectional shape, the lower surface 23 being located below the upper surface 22 and extending in the substantially horizontal direction, the inner surface 24 extending in the up-down direction to connect the vehicle-width-direction inner end portions of the upper surface 22 and the lower surface 23 together, the outer surface 25 extending in the up-down direction to connect the vehicle-width-direction outer end portions of the upper surface 22 and the lower surface 23 together.

In the upper surface 22 of the battery frame 20, the vehicle-width-direction outer portion is located at a position lower than the vehicle-width-direction inner portion. In the outer surface 25 of the battery frame 20, the upper portion is located inward in the vehicle width direction relative to the lower portion. The corner portion of the battery frame 20 on the upper side and the vehicle-width-direction outer side is formed to be recessed by the vehicle-width-direction outer portion of the upper surface 22 and the upper portion of the outer surface 25, and the battery frame 20 is disposed proximate to the side sill 10.

The battery frame 20 supports the battery housing 6 such that the vehicle-width-direction outer end portion of the upper cover 7 is fixed and mounted on the upper surface 22, and the vehicle-width-direction outer end portion of the lower cover 8 is fixed and mounted on the lower surface 23. The battery frame 20 is fixed and mounted on the lower surface of the side sill 10, specifically, the lower surface 11b of the side sill inner portion 11. The battery 3 is disposed below the floor panel 4 in this manner.

In the vehicle body 1, the cross member 30 is formed such that a vehicle-width-direction inner side 38a of the vehicle-width-direction outer end portion 38 of the cross member 30, i.e. the inner end of the inclined portion 36a1, is located at a position that does not overlap with a vehicle-width-direction outer end portion 3b of the battery modules 3a in the vehicle width direction, but is positioned on an inner side with respect to the vehicle-width-direction outer end portion 3b of the battery modules 3a, such that the inclined portion 36a1 of the vehicle-width-direction outer end portion 38 of the cross member 30 is located at a position that overlaps with the vehicle-width-direction outer end portion 3b of the battery modules 3a in the vehicle width direction. The inclined portion 36a1 of the vehicle-width-direction outer end portion 38 of the cross member 30 may be disposed to extend inward and outward in the vehicle width direction relative to the vehicle-width-direction outer end portion 3b of the battery modules 3a.

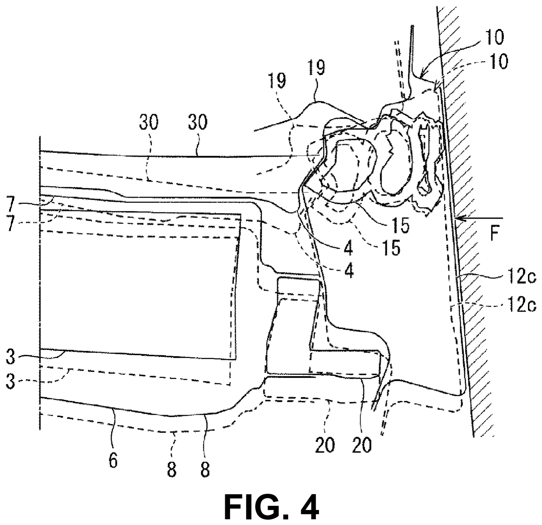

FIG. 4 is a diagram for illustrating vehicle-body deformation in a side collision. In FIG. 4, a solid line shows the result of a simulation analysis of vehicle-body deformation when an impact load F acts on the side surface 12c of the side sill outer portion 12 in a side collision, the side surface 12c forming the outer side surface of the side sill 10. Further, in FIG. 4, a broken line shows the result of a simulation analysis of vehicle body deformation in a side collision for a vehicle body in which, in the recess 35 of the cross member 30, the upper surface of the vehicle-width-direction outer end portion of the bottom wall 36 extends in the horizontal direction in the same manner as the vehicle-width-direction inner portion of the bottom wall 36.

As shown by the broken line in FIG. 4, in the case in which the upper surface of the vehicle-width-direction outer end portion of the bottom wall 36 of the recess 35 extends in the horizontal direction in the same manner as the vehicle-width-direction inner portion, when, in a side collision, the outer side surface 12c of the side sill 10 is deformed toward the vehicle-width-direction inner side and the reinforcement 15 is collapsed and deformed by a load transmitted to the reinforcement 15, the cross member 30 is buckled by the load transmitted to the cross member 30 from the reinforcement 15.

When the cross member 30 is buckled, the vehicle-width-direction outer end portion of the cross member 30 is flexurally deformed downward. Thus, there is a concern that the reinforcement 15 may be flexurally deformed downward, thereby preventing sufficient energy absorption through collapsing and deformation of the side sill 10 and the reinforcement 15.

As shown by the solid line in FIG. 4, in the case in which the upper surface of the vehicle-width-direction outer end portion of the bottom wall 36 of the recess 35 is formed to be inclined upward as the upper surface of the vehicle-width-direction outer end portion of the bottom wall 36 extends from the vehicle-width-direction inner portion toward the vehicle-width-direction outer side, when, in a side collision, the outer side surface 12c of the side sill 10 is deformed toward the vehicle-width-direction inner side and the reinforcement 15 is collapsed and deformed by a load transmitted to the reinforcement 15, the cross member 30 is buckled by the load transmitted to the cross member 30 from the reinforcement 15.

In the vehicle body 1, when the cross member 30 is buckled, the vehicle-width-direction outer end portion of the cross member 30 is flexurally deformed at a portion between the vehicle-width-direction inner portion of the cross member 30 and the inclined portion 36a1, which is disposed on the vehicle-width-direction inner side of the vehicle-width-direction outer end portion of the cross member 30, and the vehicle-width-direction outer side of the inclined portion 36a1 is lifted and flexurally deformed. Therefore, it is possible to inhibit the vehicle-width-direction outer end portion of the cross member 30 from being flexurally deformed downward, thereby causing the reinforcement 15 to be flexurally deformed downward. The side sill 10 and the reinforcement 15 can be collapsed and deformed in a straight line in the vehicle width direction, and the energy absorption of the side sill 10 and the reinforcement 15 can be enhanced.

Although the description has been made for the vehicle-width-direction outer end portion on the vehicle-body left side of the cross member 30, which is disposed on the vehicle-body rear side in the vehicle body 1, the vehicle-width-direction outer end portion of the other cross member 30 has the same configuration.

In the present embodiment, the recess 35, which is recessed downward, is provided in the upper surface 31 of the cross member 30, and the bottom wall 36 of the recess 35 is formed such that the upper surface of the vehicle-width-direction outer end portion 36a is inclined upward as the upper surface of the vehicle-width-direction outer end portion 36a extends from the vehicle-width-direction inner side toward the vehicle-width-direction outer side. However, without providing the recess in the upper surface 31 of the cross member 30, the upper surface of the vehicle-width-direction outer end portion of the upper surface 31 of the cross member 30 may be formed to be inclined upward as the upper surface of the vehicle-width-direction outer end portion of the upper surface 31 extends from the vehicle-width-direction inner side toward the vehicle-width-direction outer side.

As described above, the lower vehicle-body structure for a vehicle according to the present embodiment includes: the floor panel 4; the side sills 10 coupled to both end portions of the floor panel 4 in the vehicle width direction, and extending in the vehicle body front-rear direction; the reinforcements 15 disposed in the side sills 10, and extending in the vehicle body front-rear direction; and the cross members 30 disposed on the upper surface of the floor panel 4, and extending in the vehicle width direction. Each cross member 30 is disposed at a position that overlaps with the reinforcement 15 as viewed in a side view of the vehicle. In particular, the vertical position of the cross members (30) may overlap with the vertical position of the reinforcement (15). Further, the upper surface of the vehicle-width-direction outer end portion of the cross member 30 is formed to be inclined upward as the upper surface of the vehicle-width-direction outer end portion of the cross member 30 extends from the vehicle-width-direction inner side toward the vehicle-width-direction outer side.

Consequently, when an impact load F acts on the side sill 10 from the vehicle-width-direction outer side in a side collision, it is possible to inhibit the vehicle-width-direction outer end portion of the cross member 30 from being flexurally deformed downward by the impact load transmitted to the cross member 30 from the side sill 10 via the reinforcement 15, thereby causing the reinforcement 15 to be flexurally deformed downward, compared with a case in which the upper surface of the vehicle-width-direction outer end portion of the cross member 30 is formed at the same height as the upper surface of the vehicle-width-direction inner side of the cross member 30. Accordingly, the side sill 10 and the reinforcement 15 can be collapsed and deformed in a straight line in the vehicle width direction to enhance energy absorption of the side sill 10 and the reinforcement 15.

The upper end portion 30a of the cross member 30 and the upper end portion 15f of the reinforcement 15 are disposed at positions that overlap with each other as viewed in a side view of the vehicle. In particular, the vertical positions of an upper wall of the cross member (30) and an upper wall of the reinforcement (15) may overlap with each other. Preferably, an uppermost surface of the cross member and an uppermost surface of the reinforcement (15) may extend essentially at the same vertical position.
Consequently, compared with a case in which the upper end portion 30a of the cross member 30 and the upper end portion 15f of the reinforcement 15 are disposed at different positions as viewed in a side view of the vehicle, the side sill 10 and the reinforcement 15 can be collapsed and deformed in a straight line in the vehicle width direction.

The lower vehicle-body structure for a vehicle includes the battery housing 6 below the floor panel 4, the battery housing 6 containing the battery 3, the battery 3 includes the battery modules 3a, and the cross member 30 is formed such that the vehicle-width-direction inner side of the vehicle-width-direction outer end portion of the cross member 30 is located at a position that does not overlap with the vehicle-width-direction outer end portion of the battery modules 3a in the vehicle width direction. In particular, the vehicle-width-direction inner side of the vehicle-width-direction outer end portion of the cross member 30 may be located at a position that does not overlap with the vehicle-width-direction outer end portion of an outermost battery module 3a in the vehicle width direction. Consequently, compared with a case in which the vehicle-width-direction outer side of the vehicle-width-direction outer end portion of the cross member 30 is formed at a position that overlaps with the vehicle-width-direction outer end portion of the battery module 3a in the vehicle width direction, it is possible to suppress interference between the side sill 10 and the battery module 3a, thereby enhancing protection performance of the battery 3 even in a case in which, in a side collision, the vehicle-width-direction outer side of the vehicle-width-direction outer end portion of the cross member 30 is collapsed and deformed by an impact load transmitted to the cross member 30 from the side sill 10 via the reinforcement 15.

The cross member 30 includes the upper surface 31 and the side surfaces 32 on both sides, the side surfaces 32 extending downward from the upper surface 31, the recess 35 that is recessed downward is provided in the upper surface 31, and the upper surface of the vehicle-width-direction outer end portion of the bottom wall 36 of the recess 35 is formed to be inclined upward as the upper surface of the vehicle-width-direction outer end portion of the bottom wall 36 extends from the vehicle-width-direction inner side toward the vehicle-width-direction outer side. Consequently, the strength and rigidity of the cross member 30 can be enhanced by the recess 35 that is provided in the cross member 30, compared with a case in which no recess is provided in the upper surface 31 of the cross member 30, and the upper surface of the vehicle-width-direction outer end portion of the cross member 30 is formed to be inclined upward as the upper surface of the vehicle-width-direction outer end portion of the cross member 30 extends from the vehicle-width-direction inner side toward the vehicle-width-direction outer side.

The reinforcement 15 includes the plurality of closed cross-section portions 16a, 16b, 16c arranged in the vehicle width direction. Consequently, when an impact load acts on the side sill 10 in a side collision, the plurality of closed cross-section portions 16a, 16b, 16c can be collapsed and deformed by the impact load, thereby enhancing energy absorption of the reinforcement 15, compared with a case that uses a reinforcement including one closed cross-section portion in the vehicle width direction.

The present disclosure is not limited to the illustrated embodiment, and various modifications and design changes may be conceivable without departing from the gist of the present disclosure.

### [Reference Signs List]

- 1: vehicle body
- 3: battery
- 3a: battery module
- 4: floor panel
- 6: battery housing
- 10: side sill
- 15: reinforcement
- 16, 16a, 16b, 16c: closed cross-section portion
- 30: cross member
- 31: upper surface (upper surface of cross member)
- 32: side surface (side surface of cross member)
- 35: recess
- 36: bottom wall (bottom wall of recess)

## Claims

1. A lower vehicle-body structure for a vehicle, the lower vehicle-body structure comprising:
a floor panel (4);
side sills (10) coupled to both end portions of the floor panel (4) in a vehicle width direction, and extending in a vehicle body front-rear direction;
a reinforcement (15) disposed in each of the side sills (10), and extending in the vehicle body front-rear direction; and
a cross member (30) disposed on an upper surface of the floor panel (4), and extending in a vehicle width direction, wherein
the cross member (30) is disposed at a position that overlaps with the reinforcement (15) as viewed in a side view of the vehicle, and
at least a part of an upper surface of a vehicle-width-direction outer end portion of the cross member (30) is formed to be inclined upward as the upper surface of the vehicle-width-direction outer end portion of the cross member (30) extends from a vehicle-width-direction inner side toward a vehicle-width-direction outer side.

2. The lower vehicle-body structure for a vehicle according to claim 1, wherein
an upper end portion (30a) of the cross member (30) and an upper end portion (15f) of the reinforcement (15) are disposed at positions that overlap with each other as viewed in a side view of the vehicle.

3. The lower vehicle-body structure for a vehicle according to claim 1 or 2, the lower vehicle-body structure comprising a battery housing (6) below the floor panel (4), the battery housing (6) containing a battery (3), wherein
the battery (3) includes battery modules (3a).

4. The lower vehicle-body structure for a vehicle according to claim 3, wherein
the cross member (30) is formed such that a vehicle-width-direction inner side of the vehicle-width-direction outer end portion of the cross member (30) is located at a position that does not overlap with a vehicle-width-direction outer end portion of the battery modules (3a) in the vehicle width direction.

5. The lower vehicle-body structure for a vehicle according to claim 3 or 4, wherein
the inclined part of the upper surface of a vehicle-width-direction outer end portion of the cross member (30) overlaps with a vehicle-width-direction outer end portion of the battery modules (3a) in the vehicle width direction.

6. The lower vehicle-body structure for a vehicle according to any one of claims 3 to 5, further comprising a battery frame (20) supporting the battery housing (6) and being mounted on the side sills (10).

7. The lower vehicle-body structure for a vehicle according to claim 6, wherein the battery frame (20) is fixed and mounted on a lower surface (11b) of a side sill inner portion (11).

8. The lower vehicle-body structure for a vehicle according to any one of the preceding claims, wherein
the cross member (30) includes an upper surface (31) and side surfaces (32) on both sides, the side surfaces (32) extending downward from the upper surface,
a recess (35) that is recessed downward is provided in the upper surface (31), and
an upper surface of a vehicle-width-direction outer end portion of a bottom wall (36) of the recess (35) is formed to be inclined upward as the upper surface of the vehicle-width-direction outer end portion of the bottom wall extends from the vehicle-width-direction inner side toward the vehicle-width-direction outer side.

9. The lower vehicle-body structure for a vehicle according to claim 8, wherein the upper surface (31) of the cross member (30) on both sides of the recess extends horizontally in the vehicle-width-direction outer end portion.

10. The lower vehicle-body structure for a vehicle according to claim 8 or 9, wherein
the recess (35) is provided to extend across the entire cross member (30) in the vehicle width direction.

11. The lower vehicle-body structure for a vehicle according to any one of the preceding claims, wherein at least two cross members (30) are disposed spaced apart from each other in the vehicle body front-rear direction, and are joined to the upper surface of the floor panel (4), wherein the at least two cross members (30) have the same configuration.

12. The lower vehicle-body structure for a vehicle according to any one of the preceding claims, wherein
a lower end portion (15g) of the reinforcement (15), in particular a lower wall (15b) of the reinforcement (15), is disposed at a position that overlaps with the position of the floor panel (4) in the up-down direction.

13. The lower vehicle-body structure for a vehicle according to any one of the preceding claims, wherein
the reinforcement (15) includes a plurality of closed cross-section portions arranged in the vehicle width direction.

14. The lower vehicle-body structure for a vehicle according to any one of the preceding claims, wherein
the reinforcement (15) has a uniform cross sectional shape over its entire length in the front-rear direction
and/or
the reinforcement (15) is an extruded member
and/or
the reinforcement (15) extends in the vehicle front-rear direction and has a closed cross-sectional shape in a vehicle width direction,
and/or
the reinforcement (15) is spaced apart from the side sill except for an inner wall (15c), which is in contact with the side sill.

15. A vehicle comprising a lower vehicle-body structure according to any one of the preceding claims.
